# EUROPEAN PATENT APPLICATION

(11) **EP 4 167 309 A1**
(43) Date of publication of application: **19.04.2023**
(21) Application number: 21822812.0
(22) Date of filing: 09.06.2021
(51) Int. Cl.: H01M 4/13, H01M 4/139, H01M 10/052, H01M 10/0562

(54) **NEGATIVE ELECTRODE, LITHIUM ION SECONDARY BATTERY, MANUFACTURING METHOD OF NEGATIVE ELECTRODE FOR LITHIUM ION SECONDARY BATTERY, AND MANUFACTURING METHOD OF NEGATIVE ELECTRODE SHEET FOR LITHIUM ION SECONDARY BATTERY**

(30) Priority: 11.06.2020 JP 2020101806
(71) Applicant: Envision AESC Japan Ltd., Zama-shi, Kanagawa 252-0012 (JP)
(72) Inventor: OTOHATA, Makihiro, Zama-shi, Kanagawa 252-0012 (JP)
(74) Representative: Hamer, Christopher K.
(86) International application number: PCT/JP2021/021934
(87) International publication number: WO 2021/251432

(57) **Abstract**

There is provided a negative electrode (100) for a lithium ion secondary battery, in which a negative electrode active material layer (120) containing at least a negative electrode active material and a binder is formed on a current collector (110). An insulating layer (300) containing at least an insulating material and a binder is further provided on a surface of the negative electrode active material layer (120), the binder contained in the insulating layer (300) includes at least styrene-butadiene rubber and at least one selected from carboxymethyl cellulose and salts thereof, and the binder contained in the negative electrode active material layer (120) is at least one selected from polyacrylic acid and salts thereof.

## Description

### TECHNICAL FIELD

The present invention relates to a negative electrode, a lithium ion secondary battery, a manufacturing method of the negative electrode for the lithium ion secondary battery, and a manufacturing method of the negative electrode sheet for the lithium ion secondary battery.

### BACKGROUND ART

A lithium ion secondary battery includes a negative electrode, a positive electrode, and a separator interposed between the negative electrode and the positive electrode. Patent Document 1 discloses a non-aqueous secondary battery in which a negative electrode having a negative electrode mixture layer containing a negative electrode active material and a binder, a positive electrode, a separator, and a non-aqueous electrolytic solution are accommodated in an outer package. Patent Document 1 discloses that a porous membrane is used as the separator and a heat-resistant porous layer containing a heat-resistant inorganic filler is formed on the surface of the separator.

In the structure disclosed in Patent Document 1, the electrodes and the heat-resistant layer on the separator are not integrated. Thus, when a base member shrinks during heat generation, a heat-resistant layer adhered to the base member side also moves, and thus an insulating function between a positive electrode and a negative electrode is not sufficient.

Patent Document 2 discloses a manufacturing method of a lithium ion secondary battery that does not include a separator. In the manufacturing method disclosed in Patent Document 1, a stacked structure in which an electrode active material layer and an insulating layer are disposed in this order is provided. A first coating film is formed by applying an active-material-layer material onto at least one surface of an electrode current collector, and a second coating film is formed by applying an insulating-layer material onto the first coating film to form a film. Then, the first coating film and the second coating film are dried together.

### RELATED DOCUMENTS

### PATENT DOCUMENTS

[Patent Document 1] Japanese Laid-open Patent Publication No. 2016-170945
[Patent Document 2] Japanese Laid-open Patent Publication No. 2017-147148

### SUMMARY OF THE INVENTION

### TECHNICAL PROBLEM

In the case of a drying together method in which a second coating film is formed by applying an insulating-layer material onto a first coating film to form a film, and then the first coating film and the second coating film are dried together, the insulating-layer material penetrates into an active-material-layer material, and as a result, a mixed layer is formed between an active material layer and an insulating layer. When this mixed layer is formed, the adhesion strength between the active material layer and the insulating layer increases. However, when the insulating material penetrates too much into the active material, the active material layer may be exposed on the surface of the insulating layer. In this case, the insulating performance of the insulating layer is deteriorated.

The present invention has been made in view of the above circumstances, and an object of the present invention is to prevent deterioration of insulating performance of an insulating layer (high-resistance layer) while improving the adhesiveness between an active material layer and the insulating layer (high-resistance layer), when the insulating layer (high-resistance layer) is formed on the active material layer.

### SOLUTION TO PROBLEM

Aspects of the present invention employ the following respective configurations in order to solve the above-described problems.

A first aspect relates to a negative electrode for a lithium ion secondary battery.

According to the first aspect, there is provided a first negative electrode for a lithium ion secondary battery, having a negative electrode active material layer containing at least a negative electrode active material and a binder formed on a current collector.

The negative electrode further includes an insulating layer containing at least an insulating material and a binder provided on a surface of the negative electrode active material layer.

The binder contained in the insulating layer includes at least styrene-butadiene rubber and at least one selected from carboxymethyl cellulose and salts thereof.

The binder contained in the negative electrode active material layer is at least one selected from polyacrylic acid and salts thereof.

According to the first aspect, there is provided a second negative electrode for a lithium ion secondary battery which is a negative electrode for an all-solid-state lithium ion secondary battery.

The negative electrode has a negative electrode active material layer containing at least a negative electrode active material and a binder formed on a current collector.

The negative electrode further includes a high-resistance layer containing at least a solid electrolyte and a binder on a surface of the negative electrode active material layer.

The binder contained in the high-resistance layer includes at least styrene-butadiene rubber and at least one selected from carboxymethyl cellulose and salts thereof.

The binder contained in the negative electrode active material layer is at least one selected from polyacrylic acid and salts thereof.

A second aspect relates to a lithium ion secondary battery.

According to the second aspect, there is provided a first lithium ion secondary battery includes a positive electrode having a positive electrode active material layer formed on a current collector, a negative electrode, and an electrolyte.

The negative electrode is the negative electrode for the lithium ion secondary battery according to the first aspect.

According to the second aspect, there is provided a second lithium ion secondary battery includes a positive electrode having a positive electrode active material layer formed on a current collector, a negative electrode, and a solid electrolyte. The negative electrode is the negative electrode for an all-solid-state lithium ion secondary battery according to the first aspect.

A third aspect relates to a manufacturing method of a negative electrode for a lithium ion secondary battery.

According to the third aspect, there is provided a first manufacturing method of a negative electrode for a lithium ion secondary battery. The method includes, in at least a following order, a process (A) of applying a negative electrode active material slurry containing at least a negative electrode active material and a binder onto a sheet-like current collector, a process (B) of applying an insulating layer slurry containing at least an insulating material and a binder onto a surface of the negative electrode active material slurry, and a process (C) of drying the slurries applied in the process (A) and the process (B) together.

The binder contained in the insulating layer slurry contains at least styrene-butadiene rubber and at least one selected from carboxymethyl cellulose and salts thereof.

The binder contained in the negative electrode active material slurry is at least one selected from polyacrylic acid and salts thereof.

According to the third aspect, a second manufacturing method of a negative electrode for a lithium ion secondary battery is a manufacturing method of a negative electrode for an all-solid-state lithium ion secondary battery.

The method includes, in at least a following order, a process (A) of applying a negative electrode active material slurry containing at least a negative electrode active material and a binder onto a sheet-like current collector, a process (B) of applying a high-resistance layer slurry containing at least a solid electrolyte and a binder onto a surface of the negative electrode active material slurry, and a process (C) of drying the slurries applied in the process (A) and the process (B) together.

The binder contained in the high-resistance layer slurry contains at least styrene-butadiene rubber and at least one selected from carboxymethyl cellulose and salts thereof.

The binder contained in the negative electrode active material slurry is at least one selected from polyacrylic acid and salts thereof.

A fourth aspect relates to a manufacturing method of a negative electrode sheet for a lithium ion secondary battery.

According to the fourth aspect, a first manufacturing method of a negative electrode sheet for a lithium ion secondary battery is a manufacturing method of a negative electrode sheet for a lithium ion secondary battery for manufacturing a negative electrode for the lithium ion secondary battery by the manufacturing method according to the third aspect.

The manufacturing method includes causing a negative electrode active material slurry containing at least a negative electrode active material and a binder and an insulating layer slurry containing at least an insulating material and a binder to be continuously applied in a direction in which a current collector sheet is continuously transported.

According to the fourth aspect, there is provided a second manufacturing method of a negative electrode sheet for a lithium ion secondary battery is a manufacturing method of a negative electrode sheet for an all-solid-state lithium ion secondary battery for manufacturing a negative electrode for the all-solid-state lithium ion secondary battery by the manufacturing method according to the third aspect.

The manufacturing method includes causing a negative electrode active material slurry containing at least a negative electrode active material and a binder and a high-resistance layer slurry containing at least a solid electrolyte and a binder to be continuously applied in a direction in which a current collector sheet is continuously transported.

Any combination of the above components, and any conversion of expressions of the present invention into methods, devices, systems, recording media, computer programs, and the like are also effective as aspects of the present invention.

The various components of the present invention do not necessarily have to be provided independently of each other. For example, a plurality of components may be formed as one member. One component may be formed to be a plurality of members. A component may be a portion of another component. A portion of a component may overlap a portion of another component.

Also, although a plurality of procedures are described in order for the method of the present invention, the order of description does not limit the order in which the plurality of procedures are performed. Therefore, when the method of the present invention is performed, the order of the plurality of procedures may be changed within a range that does not interfere with the content.

Furthermore, the plurality of procedures in the method of the present invention are not limited to being performed at different times. Therefore, for example, a procedure may occur during a period in which another procedure is performed. A portion or all of a timing of performing a procedure and a timing of performing another procedure may overlap.

### ADVANTAGEOUS EFFECTS OF INVENTION

According to the above-described aspects of the present invention, it is possible to provide an insulating layer or a high-resistance layer having excellent insulating performance between a positive electrode and a negative electrode in a lithium ion secondary battery.

### BRIEF DESCRIPTION OF THE DRAWINGS

Fig. 1 is a top view of a lithium ion secondary battery according to an embodiment.
Fig. 2 is a top view of a stacked body and is a diagram obtained by removing a first lead, a second lead, and an exterior material from Fig. 1.
Fig. 3 is a cross-sectional view taken along line A-A' in Fig. 2.
Fig. 4 is a diagram for explaining an apparatus that produces a negative electrode sheet.
Fig. 5 is a diagram for explaining processes of producing a negative electrode sheet by the apparatus illustrated in Fig. 4.
Fig. 6 illustrates results of cross sections of samples in Examples and Comparative Examples.
Fig. 7 illustrates the results of the cross sections of the samples in Examples and Comparative Examples.

### DESCRIPTION OF EMBODIMENTS

Hereinafter, an embodiment of the present invention will be described with reference to the drawings. In all drawings, similar components are denoted by the similar reference signs, and description thereof will not be repeated.

In the present specification, ordinal numbers such as "first", "second", and "third" are added in order to simply distinguish components having similar names unless otherwise specified, and do not mean the particular feature of the component (for example, order or importance).

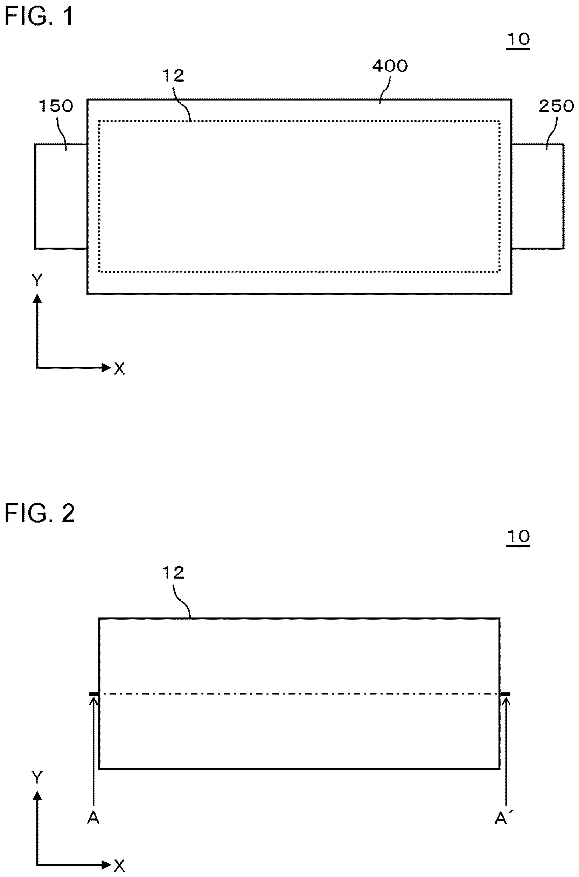

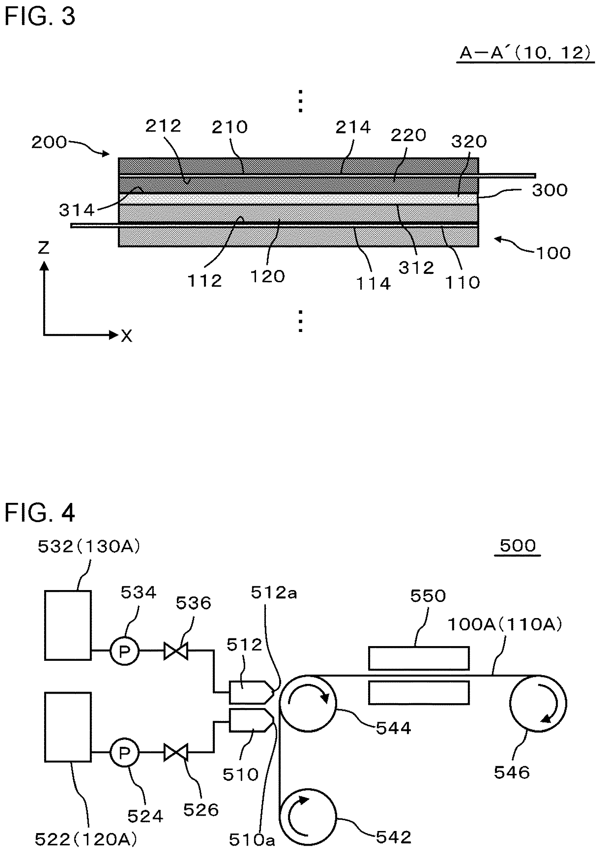

Fig. 1 is a top view of a lithium ion secondary battery 10 according to an embodiment. Fig. 2 is a diagram obtained by removing a first lead 150, a second lead 250, and an exterior material 400 from Fig. 1. In other words, Fig. 2 is a top view of a stacked body 12. Fig. 3 is a cross-sectional view taken along line A-A' in Fig. 2.

In Figs. 1 to 3, a first direction X indicates a length direction of the lithium ion secondary battery 10 (stacked body 12). A negative direction (direction indicated by an arrow indicating the first direction X) of the first direction X refers to a direction from the first lead 150 toward the second lead 250. A negative direction (direction opposite to the direction indicated by the arrow indicating the first direction X) of the first direction X refers to a direction from the second lead 250 toward the first lead 150. A second direction Y indicates a width direction of the lithium ion secondary battery 10 (stacked body 12). A negative direction (direction indicated by an arrow indicating the second direction Y) of the second direction Y refers to a left direction of the lithium ion secondary battery 10 (stacked body 12) when the lithium ion secondary battery 10 is viewed from the positive direction of the first direction X. A positive direction (direction opposite to the direction indicated by the arrow indicating the second direction Y) of the second direction Y refers to a right direction of the lithium ion secondary battery 10 (stacked body 12) when the lithium ion secondary battery 10 is viewed from the positive direction of the first direction X. A third direction Z indicates a thickness (height) direction of the lithium ion secondary battery 10 (stacked body 12). A negative direction (direction indicated by an arrow indicating the third direction Z) of the third direction Z refers to an upward direction of the lithium ion secondary battery 10 (stacked body 12). A positive direction (direction opposite to the direction indicated by the arrow indicating the third direction Z) of the third direction Z refers to a downward direction of the lithium ion secondary battery 10 (stacked body 12).

An outline of the negative electrode 100 according to the present embodiment will be described with reference to Fig. 3.

In the negative electrode 100, a negative electrode active material layer 120 containing at least a negative electrode active material and a binder is formed on a negative electrode current collector 110. Furthermore, an insulating layer 300 containing at least an insulating material and a binder is provided on the surface of the negative electrode active material layer 120. The binder contained in the insulating layer 300 includes at least styrene-butadiene rubber and at least one selected from carboxymethyl cellulose and salts thereof. The binder contained in the negative electrode active material layer 120 is at least one selected from polyacrylic acid and salts thereof.

The lithium ion secondary battery 10 will be described with reference to Figs. 1 and 2.

The lithium ion secondary battery 10 includes the stacked body 12, the first lead 150, the second lead 250, and the exterior material 400.

The first lead 150 is electrically connected to the negative electrode 100 (for example, Fig. 3). The first lead 150 may be formed of, for example, copper, a copper alloy, or a nickel-plated product thereof.

The second lead 250 is electrically connected to a positive electrode 200 (for example, Fig. 3). The second lead 250 may be formed of, for example, aluminum or an aluminum alloy.

The exterior material 400 has a rectangular shape having four sides. In the present embodiment, the second lead 250 is provided on a side of the exterior material 400, which is located on the positive direction side of the first direction X, and the first lead 150 is provided on a side of the exterior material 400, which is located on the negative direction side of the first direction X. The second lead 250 and the first lead 150 may be provided on the same side of the exterior material 400 (for example, a side located on the negative direction side or the positive direction side of the first direction X).

Each cell of the lithium ion secondary battery 10 includes the negative electrode 100, the positive electrode 200, and an electrolyte (not illustrated). The state of the electrolyte may be liquid, gel, or solid. In the present embodiment, the state of the electrolyte in the lithium ion secondary battery 10 is a liquid, and will be described as an "electrolytic solution". The manufacturing process when using a solid electrolyte will be described later.

The exterior material 400 accommodates the stacked body 12 together with an electrolytic solution (not illustrated).

The exterior material 400 may include, for example, a thermosetting resin layer and a barrier layer, and may be, for example, a stacked film including a thermosetting resin layer and a barrier layer.

As a resin material forming the thermosetting resin layer, for example, polyethylene (PE), polypropylene, nylon, polyethylene terephthalate (PET), or the like may be used. The thickness of the thermosetting resin layer is, for example, equal to or more than 20 µm and equal to or less than 200 µm.

The barrier layer has a barrier property such as prevention of leakage of an electrolytic solution or invasion of moisture from the outside. Examples of the barrier layer may include a barrier layer formed of metal, such as stainless steel (SUS) foil, aluminum foil, aluminum alloy foil, copper foil, and titanium foil. The thickness of the barrier layer is, for example, equal to or more than 10 µm and equal to or less than 100 µm.

The thermosetting resin layer of the stacked film may be one layer or two or more layers. Similarly, the barrier layer of the stacked film may be one layer or two or more layers.

The electrolytic solution is, for example, a non-aqueous electrolytic solution. The non-aqueous electrolytic solution may contain a lithium salt and a solvent for dissolving the lithium salt.

Examples of the lithium salt may include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiC₄F₉SO₃, Li(CF₃SO₂)₂N, lower fatty acid lithium carboxylate, and the like.

Examples of the solvent for dissolving the lithium salt may include: carbonates such as ethylene carbonate (EC), propylene carbonate (PC), butylene carbonate (BC), dimethyl carbonate (DMC), ethyl methyl carbonate (EMC), diethyl carbonate (DEC), methyl ethyl carbonate (MEC), and vinylene carbonate (VC); lactones such as γ-butyrolactone and γ-valerolactone; ethers such as trimethoxymethane, 1,2-dimethoxyethane, diethyl ether, tetrahydrofuran, and 2-methyltetraoxide; sulfoxides such as dimethyl sulfoxide; oxolanes such as 1,3-dioxolane and 4-methyl-1,3-dioxolane; nitrogen-containing solvents such as acetonitrile, nitromethane, formamide, and dimethylformamide; organic acid esters such as methyl formate, methyl acetate, ethyl acetate, butyl acetate, methyl propionate, and ethyl propionate; phosphate triesters and diglimes; triglimes; sulfolanes such as sulfolanes and methyl sulfolanes; oxazolidinones such as 3-methyl-2-oxazolidinone; and sultones such as 1,3-propane sultone, 1,4-butane sultone, and nafta sultone. These substances may be used singly or in combination.

The stacked body 12 will be described with reference to Fig. 3.

The stacked body 12 includes a plurality of negative electrodes 100 and a plurality of positive electrodes 200 coating the insulating layer 300. Each positive electrode 100 and each negative electrode 200 coating the insulating layer 300 are alternately stacked in the third direction Z. Each insulating layer 300 is located between the positive electrode 200 and the negative electrode 100 adjacent to each other in the third direction Z. The stacked body 12 may include only one positive electrode 100 and only one negative electrode 200 coating with the insulating layer 300.

However, for the stacked body 12, a configuration in which general polyolefin-based film separators are combined is not excluded. In this case, the stacked body 12 may adopt at least any one of a structure in which the negative electrode 100 and the positive electrode 200 are "stacked" with a separator interposed therebetween (a single layer may be used), a "winding" structure in which the negative electrode 100 and the positive electrode 200 are wound with a long separator interposed therebetween to have a winding shape, and a "zigzag" structure in which the negative electrode 100 and the positive electrode 200 are zigzagged with a long separator interposed therebetween. Furthermore, the stacked body 12 may have a structure in which a plurality of stacked bodies 12 having a "stacked" structure are further wound with a long separator, or are zigzagged.

As an example, in the "zigzag" structure, the separator may be stretched in a zigzag manner to pass between the negative electrode 100 and the positive electrode 200 adjacent to each other while being folded in the first direction X on the outside of the negative electrode 100 or the positive electrode 200 coating with the insulating layer 300, in the first direction X.

The details of the negative electrode 100 will be described. The negative electrode 100 includes a negative electrode current collector 110 and a negative electrode active material layer 120.

The negative electrode current collector 110 of the negative electrode 100 has a first surface 112 and a second surface 114. The first surface 112 of the negative electrode current collector 110 is the upper surface of the negative electrode current collector 110. The second surface 114 of the negative electrode current collector 110 is on the opposite side of the first surface 112 of the negative electrode current collector 110, and is the lower surface of the negative electrode current collector 110.

The negative electrode active material layer 120 is located over the first surface 112 of the negative electrode current collector 110. Another negative electrode active material layer 120 is located over the second surface 114 of the negative electrode current collector 110. The negative electrode active material layer 120 may be located only over one of the first surface 112 and the second surface 114 of the negative electrode current collector 110.

The end portion of the negative electrode current collector 110 on the negative direction side of the first direction X is connected to the first lead 150 (Fig. 1). For example, in the third direction Z, when the end portion of the negative electrode current collector 110 on the negative direction side of the first direction X and the first lead 150 are misaligned, the end portion of the negative electrode current collector 110 on the negative direction side of the first direction X may be bent toward the first lead 150.

The negative electrode current collector 110 may be formed of, for example, copper, stainless steel, nickel, titanium, or an alloy thereof. The shape of the negative electrode current collector 110 may be, for example, foil, a flat plate, or a mesh. The thickness of the negative electrode current collector 110 in the third direction Z (third direction Z) is, for example, equal to or more than 1 µm and equal to or less than 50 µm.

The negative electrode active material layer 120 contains a negative electrode active material and a binder resin. The negative electrode active material layer 120 may further contain a conductive auxiliary agent, if necessary.

The negative electrode active material is not particularly limited as long as the material is a normal negative electrode active material that may be used for the negative electrode 100 of the lithium ion secondary battery 10. Examples of the negative electrode active material include: carbon materials that store lithium, such as graphite, amorphous carbon, diamond-like carbon, fullerene, carbon nanotubes, and carbon nanohorns; lithium-based metal materials such as lithium metal and lithium alloys; Si-based materials such as Si, SiO₂, SiOₓ (0 < x ≤ 2), and Si-containing composite materials; and conductive polymer materials such as polyacene, polyacetylene, and polypyrrole. The negative electrode active material may be used alone or used in combination of two or more kinds thereof.

The negative electrode active material layer 120 contains, for example, 90 parts by mass or more and 99 parts by mass or less of the negative electrode active material with respect to 100 parts by mass of the total mass of the negative electrode active material layer 120.

The average particle size of the negative electrode active material is preferably equal to or more than 1 µm, and more preferably equal to or more than 2 µm from the viewpoint of suppressing a side reaction during charging/discharging and suppressing a decrease in charging/discharging efficiency. The average particle size thereof is preferably equal to or less than 100 µm and more preferably equal to or less than 50 µm from the viewpoint of input/output characteristics and manufacturing of the negative electrode 100 (smoothness of the surface of the negative electrode 100 and the like). Here, the average particle size means a particle size (median diameter: D50) at an integrated value of 50% in particle size distribution (volume basis) by a laser diffraction/scattering method.

The density of the negative electrode active material layer 120 is, for example, equal to or more than 1.2 g/cm³ and equal to or less than 2.0 g/cm³.

The thickness (third direction Z) of the negative electrode active material layer 120 over one of both the surfaces (first surface 112 and second surface 114) of the negative electrode current collector 110 may be appropriately determined. The thickness is, for example, equal to or less than 80 µm.

The total thickness (third direction Z) of the negative electrode active material layer 120 over both the surfaces (first surface 112 and second surface 114) of the negative electrode current collector 110 may be appropriately determined. The thickness is, for example, equal to or less than 160 µm.

When water is used as a solvent for obtaining a slurry, the binder resin contained in the negative electrode active material layer 120 may be, for example, a rubber-based binder (for example, SBR (styrene-butadiene rubber)) or acrylic binder resin. Such an aqueous binder resin may be in the form of an emulsion. When water is used as the solvent, it is preferable to use an aqueous binder and a thickener such as carboxymethyl cellulose (CMC) in combination.

The amount of the binder resin contained in the negative electrode active material layer 120 may be appropriately determined. The negative electrode active material layer 120 contains the binder resin that is, for example, equal to or more than 1.0 parts by mass and equal to or less than 10.0 parts by mass with respect to 100 parts by mass of the total mass of the negative electrode active material layer 120, and more preferably contains the binder resin that is equal to or more than 3 parts by mass and equal to or less than 6 parts by mass.

The total weight of polyacrylic acid and salts thereof in the binder, which are the polyacrylic acid and the salts thereof contained in the negative electrode active material layer 120 with respect to the total weight of a solid material forming the negative electrode active material layer 120 is equal to or more than 3% by weight and equal to or less than 6% by weight.

The details of the positive electrode 200 will be described. The positive electrode 200 includes a positive electrode current collector 210 and a positive electrode active material layer 220.

The positive electrode current collector 210 of the positive electrode 200 has a third surface 212 and a fourth surface 214. The third surface 212 of the positive electrode current collector 210 is the lower surface of the positive electrode current collector 210. The fourth surface 214 of the positive electrode current collector 210 is on the opposite side of the third surface 212 of the positive electrode current collector 210, and is the upper surface of the positive electrode current collector 210.

The positive electrode active material layer 220 is located over the third surface 212 of the positive electrode current collector 210. Another positive electrode active material layer 220 is located over the fourth surface 214 of the positive electrode current collector 210. The positive electrode active material layer 220 may be located only over one of the third surface 212 and the fourth surface 214 of the positive electrode current collector 210.

The end portion of the positive electrode current collector 210 on the positive direction side of the first direction X is connected to the second lead 250 (Fig. 1). For example, in the third direction Z, when the end portion of the positive electrode current collector 210 on the positive direction side of the first direction X and the second lead 250 are misaligned, the end portion of the positive electrode current collector 210 on the positive direction side of the first direction X may be bent toward the second lead 250.

The positive electrode current collector 210 may be formed of, for example, aluminum, stainless steel, nickel, titanium, or an alloy thereof. The shape of the positive electrode current collector 210 may be, for example, foil, a flat plate, or a mesh. The thickness of the positive electrode current collector 210 (third direction Z) is, for example, equal to or more than 1 µm and equal to or less than 50 µm.

The positive electrode active material layer 220 contains a positive electrode active material, a binder resin, and a conductive auxiliary agent.

The positive electrode active material is not particularly limited as long as the material is a normal positive electrode active material that may be used for the positive electrode 200 of the lithium ion secondary battery 10. Examples of the positive electrode active material include: composite oxide of lithium and transition metal such as lithium-nickel composite oxide, lithium-cobalt composite oxide, lithium-manganese composite oxide, lithium-nickel-manganese composite oxide, lithium-nickel-cobalt composite oxide, lithium-nickel-aluminum composite oxide, lithium-nickel-cobalt-aluminum composite oxide, lithium-nickel-manganese-cobalt composite oxide, lithium-nickel-manganese-aluminum composite oxide, and lithium-nickel-cobalt-manganese-aluminum composite oxide; transition metal sulfides such as TiS₂, FeS, and MoS₂; and transition metal oxides such as MnO, V₂O₅, V₆O₁₃, and TiO₂, olivine-type lithium phosphorus oxides and the like. The olivine-type lithium phosphorus oxide contains, for example, at least one element in the group consisting of Mn, Cr, Co, Cu, Ni, V, Mo, Ti, Zn, Al, Ga, Mg, B, Nb, and Fe, lithium, phosphorus, and oxygen. Such compounds may be obtained by partially replacing some elements with other elements in order to improve the properties. Among the compounds, olivine-type lithium iron phosphorus oxide, lithium-nickel composite oxide, lithium-cobalt composite oxide, lithium-manganese composite oxide, lithium-nickel-manganese composite oxide, lithium-nickel-cobalt composite oxide, lithium-nickel-aluminum composite oxide, lithium-nickel-cobalt-aluminum composite oxide, lithium-nickel-manganese-cobalt composite oxide, lithium-nickel-manganese-aluminum composite oxide, lithium-nickel-cobalt-manganese-aluminum composite oxide are preferable. The positive electrode active materials have large capacity and large energy density in addition to a high working potential. As the positive electrode active material, only one kind may be used alone, or two or more kinds may be used in combination.

The positive electrode active material layer 220 contains, for example, 90 parts by mass or more and 99 parts by mass or less of the positive electrode active material with respect to 100 parts by mass of the total mass of the positive electrode active material layer 220.

The average particle size of the positive electrode active material contained in the positive electrode active material layer 220 is preferably equal to or more than 1 µm, and more preferably equal to or more than 2 µm from the viewpoint of suppressing a side reaction during charging/discharging and suppressing a decrease in charging/discharging efficiency. The average particle size thereof is preferably equal to or less than 100 µm and more preferably equal to or less than 50 µm from the viewpoint of input/output characteristics and manufacturing of the positive electrode 200 (smoothness of the surface of the positive electrode 200 and the like). Here, the average particle size means a particle size (median diameter: D50) at an integrated value of 50% in particle size distribution (volume basis) by a laser diffraction/scattering method.

The density of the positive electrode active material layer 220 is, for example, equal to or more than 2.0 g/cm³ and equal to or less than 4.0 g/cm³.

The thickness (third direction Z) of the positive electrode active material layer 220 over one of both the surfaces (third surface 212 and fourth surface 214) of the positive electrode current collector 210 may be appropriately determined. The thickness is, for example, equal to or less than 100 µm. The total thickness (third direction Z) of the positive electrode active material layer 220 over both the surfaces (third surface 212 and fourth surface 214) of the positive electrode current collector 210 may be appropriately determined. The thickness is, for example, equal to or less than 200 µm.

The binder resin contained in the positive electrode active material layer 220 is, for example, polytetrafluoroethylene (PTFE) or polyvinylidene fluoride (PVDF).

The amount of the binder resin contained in the positive electrode active material layer 220 may be appropriately determined. The positive electrode active material layer 220 contains, for example, 0.1 part by mass or more and 10.0 parts by mass or less of the binder resin with respect to 100 parts by mass of the total mass of the positive electrode active material layer 220.

A conductive auxiliary agent contained in the positive electrode active material layer 220 is, for example, carbon black, ketjen black, acetylene black, natural graphite, artificial graphite, carbon fiber such as carbon nanotubes, or the like. The graphite may be, for example, scaly graphite or spheroidal graphite. These substances may be used singly or in combination.

The amount of the conductive auxiliary agent contained in the positive electrode active material layer 220 may be appropriately determined. The positive electrode active material layer 220 contains, for example, 0.01 part by mass or more and 8.0 parts by mass or less of the conductive auxiliary agent with respect to 100 parts by mass of the total mass of the positive electrode active material layer 220.

The positive electrode active material layer 220 may appropriately contain a pH adjuster (for example, oxalic acid) for neutralizing an alkaline component contained in the positive electrode active material for the purpose of preventing gelation of slurry.

Details of the insulating layer 300 will be described.

The insulating layer 300 has a fifth surface 312 and a sixth surface 314. The fifth surface 312 of the insulating layer 300 faces the negative electrode 100. The sixth surface 314 of the insulating layer 300 faces the positive electrode 200.

The insulating layer 300 has a function of electrically insulating the negative electrode 100 and the positive electrode 200 from each other and allowing ions (for example, lithium ions) to pass therethrough.

The insulating layer 300 is preferably formed on the entire surface 122 of the negative electrode active material layer 120 in the negative electrode 100, that faces at least a region where the active material layer of the positive electrode 200 is formed.

The shape of the insulating layer 300 may be appropriately determined in accordance with the shape of the negative electrode 100 or the positive electrode 200, and may be set to, for example, a rectangle.

The insulating layer 300 contains at least an insulating material and a binder.

The insulating material contained in the insulating layer 300 includes, for example, at least one selected from aluminum oxide (for example, α-alumina), silica, acrylic resin, magnesia, calcia, titania, zirconia, boehmite, and magnesium hydroxide.

The binder contained in the insulating layer 300 includes at least styrene-butadiene rubber and at least one selected from carboxymethyl cellulose and salts thereof.

The D50 particle size at which a cumulative volume is 50% in a particle size distribution of a particle size of the insulating material is equal to or more than 0.2 µm and equal to or less than 0.8 µm.

The weight of the styrene-butadiene rubber contained in the insulating layer 300 with respect to a total weight of a solid material forming the insulating layer 300 is equal to or more than 3% by weight and equal to or less than 6% by weight.

The thickness (third direction Z) of the insulating layer 300 may be appropriately determined, and may be set to be, for example, equal to or more than 1.0 µm and equal to or less than 45.0 µm.

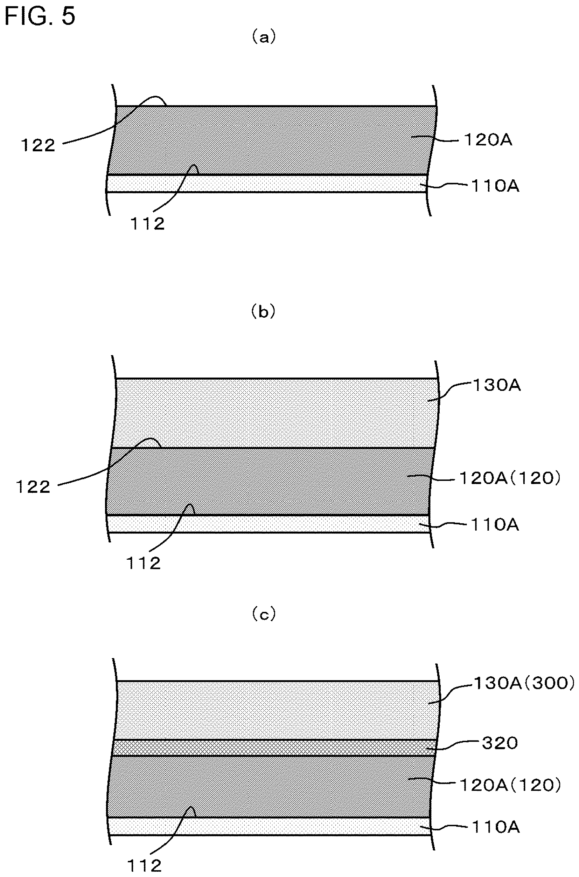

As illustrated in Figs. 3 and 5, in the lithium ion secondary battery 10, a separator different from the insulating layer 300 formed on the negative electrode active material layer 120 in the negative electrode 100 is not disposed between the positive electrode 200 and the negative electrode 100.

Fig. 4 is a diagram for explaining an apparatus 500 that produces a negative electrode sheet 100A. Fig. 5 is a diagram for explaining processes of producing the negative electrode sheet 100A by the apparatus 500 illustrated in Fig. 4.

In Fig. 4, the apparatus 500 includes a first discharge head 510, a second discharge head 512, a first tank 522, a first pump 524, a first valve 526, a second tank 532, a second pump 534, a second valve 536, a first transport roller 542, a second transport roller 544, a third transport roller 546, and a dryer 550.

The first discharge head 510 and the second discharge head 512 respectively have a discharge port 510a and a discharge port 512a. The first discharge head 510 and the second discharge head 512 may be configured by one discharge head. It is sufficient that one discharge head has at least the discharge port 510a and the discharge port 512a.

In Fig. 4, a first transport roller 542, a second transport roller 544, and a third transport roller 546 rotate in directions (clockwise) of arrows attached to the first transport roller 542, the second transport roller 544, and the third transport roller 546, respectively. Thus, the negative electrode current collector sheet 110A is fed from the lower side to the upper side from the first transport roller 542 over the second transport roller 544, and is fed from the left side to the right side from the second transport roller 544 over the third transport roller 546.

An outline of a method for producing the negative electrode sheet 100A according to the present embodiment will be described with reference to Fig. 5.

The method includes, in at least this order, a process (A) of applying a negative electrode active material slurry (also referred to as a first slurry 120A below) containing at least a negative electrode active material and a binder onto the first surface 112 of the negative electrode sheet 100A, a process (B) of applying an insulating layer slurry (also referred to as a second slurry 130A below) containing at least an insulating material and a binder onto the surface 122 of the negative electrode active material layer 120 (first slurry 120A), and a process (C) of drying the first slurry 120A and the second slurry 130A applied in the processes (A) and (B) together.

First, in the process (A), the first slurry 120A is wetting and spreading along the first surface 112 of the negative electrode current collector sheet 110A (see Fig. 5(a)) and applied onto the first surface 112 of the negative electrode current collector sheet 110A.

Then, in the process (B), the second slurry 130A is wetting and spreading along the surface 122 of the negative electrode active material layer 120 formed by the first slurry 120A applied in the process (A) (see Fig. 5(b)) and applied onto the surface 122 of the negative electrode active material layer 120.

As illustrated in Fig. 5(c), a mixed layer 320 of the negative electrode active material layer 120 (first slurry 120A) and the insulating layer 300 (second slurry 130A) is formed at an interface between the negative electrode active material layer 120 and the insulating layer 300. The thickness of the mixed layer 320 is thinner than the thickness of the negative electrode active material layer 120.

The details of the method according to the present embodiment will be described with reference to Figs. 4 and 5.

The first slurry 120A is accommodated in the first tank 522. The second slurry 130A is accommodated in the second tank 532. The first slurry 120A accommodated in the first tank 522 is supplied to the discharge head 510 through the first pump 524 and the first valve 526. The second slurry 130A accommodated in the second tank 532 is supplied to the discharge head 510 through the second pump 534 and the second valve 536.

The first slurry 120A supplied to the discharge head 510 is discharged from the discharge port 510a of the first discharge head 510 toward the first surface 112 of the negative electrode current collector sheet 110A. The pressure of the first slurry 120A discharged to the first surface 112 of the negative electrode current collector sheet 110A is adjusted by, for example, the first pump 524. The flow rate of the first slurry 120A discharged to the first surface 112 of the negative electrode current collector sheet 110A is adjusted by, for example, the first valve 526.

The second slurry 130A supplied to the discharge head 510 is discharged from the discharge port 512a of the second discharge head 512 toward the first surface 112 of the negative electrode current collector sheet 110A. The pressure of the second slurry 130A discharged to the first surface 112 of the negative electrode current collector sheet 110A is adjusted by, for example, the second pump 534. The flow rate of the second slurry 130A discharged to the first surface 112 of the negative electrode current collector sheet 110A is adjusted by, for example, the second valve 536.

In the present embodiment, the first slurry 120A and the second slurry 130A are sequentially discharged from the discharge port 510a of the first discharge head 510 and the discharge port 512a of the second discharge head 512, respectively. Thus, the second slurry 130A further wets and spreads along the upper surface 122 of the negative electrode active material layer 120 formed by the first slurry 120A that wets and spreads along the first surface 112.

In the present embodiment, the first slurry 120A and the second slurry 130A are applied continuously in a direction in which the negative electrode current collector sheet 110A is transported. Therefore, the first slurry 120A and the second slurry 130A applied to the negative electrode current collector sheet 110A are continuously stretched in the direction in which the negative electrode current collector sheet 110A is transported.

In the present embodiment, at least the discharge port 510a of the first discharge head 510 and the discharge port 512a of the second discharge head 512 are provided to be arranged in the direction in which the negative electrode current collector sheet 110A is transported. The first slurry 120A is discharged from the discharge port 510a of the first discharge head 510, and the second slurry 130A is discharged from the discharge port 512a of the second discharge head 512.

The distance between the discharge port 510a of the first discharge head 510 and the discharge port 512a of the second discharge head 512 may be appropriately set.

The first slurry 120A contains a material to be the negative electrode active material layer 120 and a solvent. The solvent contained in the first slurry 120A is, for example, water.

The second slurry 130A contains a material to be the insulating layer 300 and a solvent. The solvent contained in the second slurry 130A is, for example, water.

The solid content concentration of the first slurry 120A is equal to or more than 40% and equal to or less than 80%. The solid content concentration of the second slurry 130A is equal to or more than 20% and equal to or less than 80%.

The first slurry 120A and the second slurry 130A are supplied from the discharge head 510 to the negative electrode current collector sheet 110A, and then the negative electrode current collector sheet 110A is fed to the dryer 550. Thus, the first slurry 120A and the second slurry 130A are dried by the dryer 550. The first slurry 120A and the second slurry 130A are formed as the negative electrode active material layer 120 and the insulating layer 300, respectively, by drying of the dryer 550.

As illustrated in Fig. 5(c), the mixed layer 320 of the negative electrode active material layer 120 (first slurry 120A) and the insulating layer 300 (second slurry 130A) is formed at an interface between the negative electrode active material layer 120 formed by the first slurry 120A and the insulating layer 300 formed by the second slurry 130A. The thickness of the mixed layer 320 is thinner than the thickness of the negative electrode active material layer 120.

The thickness of the mixed layer 320 is evaluated by the following method.

A direction from a side of the surface 122 of the negative electrode active material layer 120 toward the current collector 110 is defined as the Z-direction.

An SEM image of the cross section of the negative electrode 100 captured by using a scanning electron microscope (SEM) is analyzed. Regarding the image analysis, elemental mapping using an energy dispersive X-ray analysis (EDX: Energy Dispersive X-ray spectroscopy) method is performed.

The maximum value in the Z-direction at which an element that is not detected from the negative electrode active material, but is detected from the insulating material is detected is set as Z_{A}. The average thickness of the negative electrode active material layer 120 in the Z-direction is set as Z_{B}.

At this time, Z_{A}/Z_{B} is equal to or less than 11%.

Furthermore, the maximum value Z_{A} of the thickness in the Z-direction is preferably equal to or less than 35 µm, more preferably equal to or less than 25 µm.

According to the present embodiment, the negative electrode 100 includes the insulating layer 300 that contains at least the insulating material and a binder, on the surface 122 of the negative electrode active material layer 120 formed on the first surface 112 of the sheet-like current collector 110. In the negative electrode 100 in the present embodiment, the binder contained in the insulating layer 300 contains at least styrene-butadiene rubber and at least one selected from carboxymethyl cellulose and salts thereof, and the binder contained in the negative electrode active material layer 120 is set to be at least one selected from polyacrylic acid and salts thereof. As a result, the negative electrode 100 in which the negative electrode active material layer 120 and the insulating layer 300 are not excessively mixed can be manufactured.

In the case of a sequential drying method in which the insulating layer 300 is applied after the negative electrode active material layer 120 is formed by coating, drying, and pressing, the thin mixed layer 320 is not formed between the negative electrode active material layer 120 and the insulating layer 300. Therefore, the peeling strength between the negative electrode active material layer 120 and the insulating layer 300 is low, and similarly, the insulating function between the positive electrode and the negative electrode is not sufficient.

Further, in the sequential drying method, it is not possible to uniformly form the insulating layer 300 due to irregularities and wrinkles on the surface to be coated which is pressed, and it is not possible to obtain alignment due to the glossiness of the surface to be coated. Therefore, there is a concern that the insulating layer 300 may not completely cover the negative electrode active material layer 120, or the insulating layer 300 may be applied to a portion at which the insulating layer 300 is not to be applied.

In addition, in a method in which the insulating layer 300 is formed by coating and drying together immediately after the negative electrode active material 120 is applied, when the solvents used for the slurries of the negative electrode active material layer 120 and the insulating layer 300 are not the same, affinity is low, and thus the mixed layer 320 is not formed.

According to the manufacturing method of a negative electrode for a lithium ion secondary battery in the present embodiment, the method includes, in at least this order, a process (A) of applying a negative electrode active material slurry (first slurry 120A) containing at least a negative electrode active material and a binder onto the negative electrode current collector sheet 110A, a process (B) of applying an insulating layer slurry (second slurry 130A) containing at least an insulating material and a binder onto the surface 122 of the negative electrode active material layer 120, and a process (C) of drying the slurries applied in the processes (A) and (B) together. Thus, the problem in the sequential coating and drying method described above is solved. In addition, when the insulating layer 300 is formed on the negative electrode active material layer 120, it is possible to prevent deterioration of the insulating performance of the insulating layer 300 while improving adhesiveness between the negative electrode active material layer 120 and the insulating layer 300.

In the drying together method, when the same solvent is used for the slurries of the negative electrode active material layer 120 and the insulating layer 300, but the combination of binders used for the respective slurries is not appropriate, the insulating layer slurry (second slurry 130A) excessively penetrates into the negative electrode active material layer 120. According to the manufacturing method in the present embodiment, by using an appropriate combination of the binders used for the respective slurries, it is possible to prevent excessive penetration of the insulating layer slurry (second slurry 130A) into the negative electrode active material layer 120 and prevent deterioration of the insulating performance of the insulating layer.

According to the present embodiment, the thickness of the mixed layer 320 of the negative electrode active material layer 120 and the insulating layer 300, which is formed at the interface between the negative electrode active material layer 120 and the insulating layer 300, is thinner than the thickness of the negative electrode active material layer 120. As described above, according to the present embodiment, it is possible to prevent excessive penetration of the second slurry 130A forming the insulating layer 300 into the negative electrode active material layer 120. In addition, since it is possible to prevent the excessive penetration of the first slurry 120A forming the negative electrode active material layer 120 into the insulating layer 300, the active material is not exposed to the surface of the insulating layer 300, and the insulating function is not impaired. Thus, it is possible to appropriately secure the insulating function between the positive electrode and the negative electrode in the lithium ion secondary battery.

According to the present embodiment, when the average thickness of the negative electrode active material layer in the Z-direction is set as Z_{B}, regarding the maximum depth Z_{A} at which the insulating material is detected in the negative electrode active material layer 120, Z_{A}/Z_{B} is equal to or less than 11%. Thus, the insulating material is not excessively diffused into the negative electrode active material layer 120.

According to the present embodiment, the particle size of the insulating material is limited to be equal to or more than 0.2 µm and equal to or less than 0.8 µm. As a result, it is possible to prevent an occurrence of a problem that, when the particle size of the insulating material is too small, the covering is not possible, and a problem that, when the particle size is too large, the number of particles decreases with respect to the film thickness, and thus the insulating property is deteriorated. In other words, it is possible to urge suitable covering and to secure the appropriate insulating property because the particles are contained at an appropriate ratio with respect to the film thickness.

According to the present embodiment, by limiting the amount of the binder in the insulating layer 300, it is possible to solve a problem that, when the amount of the binder is too small, the adhesiveness is deteriorated. In addition, it is possible to solve a problem that, when the amount of the binder is large, the voids in the insulating layer become small, the movement of the lithium salt between the positive and negative electrodes is hindered, and the resistance of the battery is increased.

According to the present embodiment, by limiting the amount of the binder in the negative electrode active material layer 120, a sufficient amount of the negative electrode active material is ensured, and an excessive amount of the binder with high electrical resistance is not provided. Thus, it is possible to obtain an effect that it is possible to obtain an electrode with a high capacity and a high output.

According to the present embodiment, the insulating layer 300 having a function of a separator is formed on the negative electrode active material layer 120. Thus, the separator to be disposed between the positive electrode 200 and the negative electrode 100 is unnecessary. As a result, it is possible to reduce the thickness of the lithium ion secondary battery and prevent an occurrence of a short circuit between the positive electrode and the negative electrode in the lithium ion secondary battery.

Hitherto, the embodiment of the present invention has been described above with reference to the drawings, but these are examples of the present invention, and various configurations other than the above description may be adopted.

For example, in the above-described embodiment, the configuration in which the battery cell contains an electrolytic solution has been described. A gel electrolyte may also be produced in the similar process to the process in the embodiment. Meanwhile, in the case of an all-solid-state battery in which the electrolyte is solid, the manufacturing method of the negative electrode 100 will be described below.

In the process (A), a negative electrode active material slurry (first slurry 120A) containing at least a negative electrode active material, a binder, and a solid electrolyte is applied. The solid electrolyte is, for example, Li₇La₃Zr₂O₁₂ (LLZ).

In the process (B), a high-resistance layer slurry (second slurry 130A) containing at least a solid electrolyte and a binder is applied onto the surface 122 of the negative electrode active material layer 120. A solid electrolyte is, for example, Li₇La₃Zr₂O₁₂ (LLZ).

Then, in the process (C), the slurries applied in the processes (A) and (B) are dried together.

As described above, in cases other than all-solid-state batteries, the insulating material contained in the insulating layer 300 includes at least one selected from, for example, aluminum oxide (for example, α-alumina), silica, acrylic resin, magnesia, calcia, titania, zirconia, boehmite, and magnesium hydroxide. On the other hand, in the case of an all-solid-state battery, the high-resistance layer (high-resistance layer slurry) is a solid electrolyte and does not necessarily contain the insulating material contained in the insulating layer 300 described above. That is, in the case of an all-solid-state battery, the high-resistance layer (high-resistance layer slurry) only needs to contain at least a solid electrolyte.

### Examples

Table 1 shows production conditions and evaluation results of the negative electrode 100 in Examples 1 to 11. The details of the production conditions for a sample will be described below.

### [Table 1]

**[Table 1]**

| | Negative electrode | | | Insulating layer | | | | | Insulation rate |
|---|---|---|---|---|---|---|---|---|---|
| | Active material | Binder type | Mixing ratio | Filler | Particle size (D50) µm | Binder type | Mixing ratio | Basis weight (mg/cm²) | |
| Example 1 | Graphite 96.6% | PAA | 3% | Alumina | 0.7 | CMC + SBR | 4% + 3% | 2.0 | 100% |
| Example 2 | Graphite 96.6% | PAA | 3% | Alumina | 0.7 | CMC + SBR | 4% + 3% | 2.6 | 100% |
| Example 3 | Graphite 96.6% | PAA | 3% | Alumina | 0.7 | CMC + SBR | 3% + 3% | 2.0 | 100% |
| Example 4 | Graphite 96.6% | PAA | 3% | Alumina | 0.7 | CMC + SBR | 5% + 4% | 2.0 | 100% |
| Example 5 | Graphite 96.6% | PAA | 3% | Alumina | 0.7 | CMC + SBR | 6% + 4% | 2.0 | 100% |
| Example 6 | Graphite 93.7% SiOₓ 2.9% | PAA | 3% | Alumina | 0.7 | CMC + SBR | 4% + 3% | 2.0 | 100% |
| Example 7 | Graphite 86.0% SiOₓ 9.6% | PAA | 4% | Alumina | 0.7 | CMC + SBR | 4% + 3% | 2.0 | 100% |
| Example 8 | Graphite 56.2% SiOₓ 37.4% | PAA | 6% | Alumina | 0.7 | CMC + SBR | 4% + 3% | 2.0 | 100% |
| Example 9 | Graphite 96.6% | PAA | 3% | Acrylic resin PMMA | 0.8 | CMC + SBR | 6% + 6% | 1.6 | 100% |
| Example 10 | Graphite 96.6% | PAA | 3% | Silica | 0.3 | CMC + SBR | 3% + 4% | 2.0 | 100% |
| Example 11 | Graphite 96.6% | PAA | 3% | Silica | 0.6 | CMC + SBR | 3% + 3% | 2.0 | 100% |

### <Production Method and Conditions>

Natural graphite covered with amorphous graphite manufactured by Hitachi Chemical Co., Ltd. was used as the negative electrode active material forming the negative electrode active material layer 120.

The negative electrode active material layer 120 contained a conductive auxiliary agent, and carbon black was used as the conductive auxiliary agent. In all the examples and comparative examples, carbon black C65 was set to 0.4% by weight in the total weight of the solid materials forming the negative electrode active material layer 120.

Regarding the binder forming the negative electrode active material layer 120, Aqua Charge manufactured by Sumitomo Seika Co., Ltd. was used as Polyacrylic Acid (PAA).

As the insulating material (filler) forming the insulating layer 300, any one of alumina, acrylic resin (polymethyl methacrylate resin (PMMA: Poly Methyl Methacrylate)), and silica was used. Alumina AKP-3000 manufactured by Sumitomo Chemical Co., Ltd. was used as alumina. As the acrylic resin (PMMA), product number (grade) MX-80H3wT (average particle size of 0.8 µm, crosslinking degree: high) of crosslinked acrylic monodisperse particle MX series manufactured by Soken Chemical Co., Ltd. was used. As the silica, SFP-20M (0.3 µm) or SFP-30M (0.6 µm) of Super Fine Powder (submicron silica) manufactured by Denka Co., Ltd. was used.

As the binder forming the insulating layer 300, a mixture of Sodium Carboxymethyl Cellulose (CMC-Na) and Styrene-Butadiene Rubber (SBR) was used. As the CMC, MAC-350HC of the MAC series of SUNROSE (registered trademark) manufactured by Nippon Paper Industries Co., Ltd. was used. BM-451B manufactured by Nippon Zeon Co., Ltd. was used as the SBR.

Each slurry viscosity was 8000±2000 mPa·s (conditions: B-type viscometer, 20°C, shear rate of 2.04s-1).

Simultaneous coating was performed by using the two first and second discharge heads 510 and 512 illustrated in Fig. 4. Simultaneous coating will be described later. The basis weight was 11 mg/cm² for the negative electrode active material layer 120 and 2 mg/cm² for the insulating layer 300. As shown in each table, in some examples and comparative examples, samples in which the basis weight of the insulating layer 300 was changed were produced.

### <Evaluation Method>

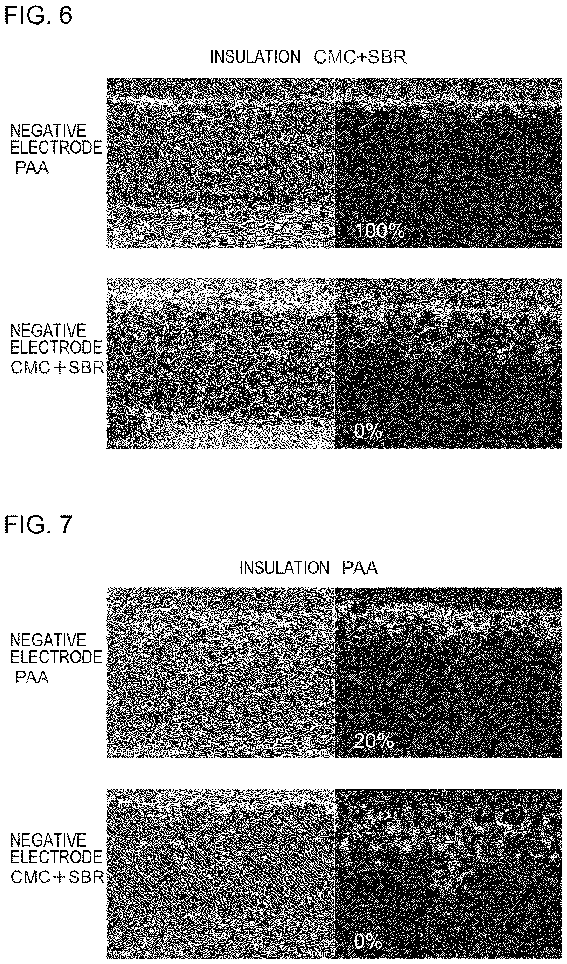

The negative electrode 100 produced by the following method was evaluated.
(1) Conduction check by a tester
   The samples in Examples 1 to 11 and Comparative Examples 1 to 14 were tested. Tables 1 and 2 show results.
(2) Take a photo of the electrode surface and measure the whiteness
   The samples in Example 1 and Comparative Examples 1, 5, and 9 were tested. The results will be described later.
(3) Cross-sectional observation
   An SEM image of the cross section of the negative electrode 100 captured by using a scanning electron microscope (SEM) is analyzed. Regarding the image analysis, elemental mapping using an energy dispersive X-ray analysis (EDX: Energy Dispersive X-ray spectroscopy) method is performed.
   The samples in Example 1 and Comparative Examples 1, 5, and 9 were tested. The results will be described later with reference to Figs. 6 and 7.
(4) Evaluation of interfacial peeling strength between simultaneous coating and sequential coating
   Using the material of the sample in Example 1, a comparison was made by using a sample produced by simultaneous coating in the present invention and a sample produced by sequential coating. The results will be described later.

In simultaneous coating, slurries applied in the following processes (A) and (B) were dried together. Here, a method in which the coating processes (A) and (B) are performed sequentially, and two kinds of slurries are simultaneously dried is referred to as the simultaneous coating.

In the sequential coating, after the following process (A), the slurry applied in the process (A) was dried, and then the following process (B) was performed, and the slurry applied in the process (B) was dried.
Process (A) of applying a negative electrode active material slurry containing at least a negative electrode active material and a binder
Process (B) of applying an insulating layer slurry containing at least an insulating material and a binder onto a surface of the negative electrode active material layer

### <Evaluation results>

### (1) Conduction check by a tester

As a tester, a digital multimeter (CDM-2000) manufactured by Custom Co., Ltd. was used. The resistance range was measured at 30 MΩ. The negative electrode sheet 100A includes a copper foil (current collector sheet), the negative electrode active material layer 120, and the insulating layer 300. In the conduction check method, the tips of the test leads of the tester were applied to the front and back surfaces of a sample of 10 cm square, and, when the measurement limit (open range) was reached, the sample was "insulated". Conduction check was performed for 10 samples, and the ratio of the number of insulated samples (the number of samples in which conduction was not obtained) was calculated. When all 10 samples are insulated, the ratio is 100%.

As a result of conduction check, the insulation rate was 100% in all of Examples 1 to 11. In other words, the results indicate that, in all of Examples 1 to 11, the favorable insulating property was obtained in all 10 samples.

In any of Examples 1 to 11, the binder contained in the insulating layer 300 contained at least styrene-butadiene rubber and at least one selected from carboxymethyl cellulose and salts thereof, and the binder contained in the negative electrode active material layer 120 was at least one selected from polyacrylic acid and salts thereof. Specifically, in Examples 1 to 11, a mixture of CMC and SBR was used as the binder contained in the insulating layer 300, and PAA was used as the binder contained in the negative electrode active material layer 120.

In each of Examples 1 to 11, the insulating material in which the D50 particle size at which the cumulative volume becomes 50% in the particle size distribution of the particle size of the insulating material forming the insulating layer 300 is in a range of 0.2 µm or more and 0.8 µm or less was used. Specifically, in Example 10, the insulating material in which the D50 particle size is 0.3 µm (small) was used. In Example 11, the insulating material in which the D50 particle size is 0.6 µm (large) was used. In Examples 1 to 8, the insulating material in which the D50 particle size is 0.7 µm (large) was used. In Example 9, the insulating material in which the D50 particle size is 0.8 µm (large) was used. No influence of the D50 particle size of the insulating material on the insulation rate was observed.

In all of Examples 1 to 11, the weight of SBR contained in the insulating layer 300 was set to be equal to or more than 3% by weight and equal to or less than 6% by weight with respect to the total weight of the solid materials forming the insulating layer 300. Specifically, in Examples 1 to 3, 6 to 8, and 11, the weight of SBR was set to 3% by weight. In Examples 4 to 5 and 10, the weight of SBR was set to 4% by weight. In Example 9, the weight of SBR was set to 6% by weight. In addition, the total content of CMC and SBR in the binder of the insulating layer 300 was set to 7% by weight for Examples 1 to 2, 6 to 8, and 10, 6% by weight for Examples 3 and 11, 9% by weight for Example 4, 10% by weight for Example 5, and 12% by weight for Example 9. No influence of the total CMC and SBR content in the binder of the insulating layer 300 on the insulation rate was observed.

In all of Examples 1 to 11, the total weight of polyacrylic acid and salts thereof in the binder, which are the polyacrylic acid and the salts thereof contained in the negative electrode active material layer 120 with respect to the total weight of the solid materials forming the negative electrode active material layer 120 was set to be equal to or more than 3% by weight and equal to or less than 6% by weight. Specifically, the weight of PAA in the binder was set to 3% by weight in Examples 1 to 6 and 9 to 11, 4% by weight in Example 7, and 6% by weight in Example 8. This is included within the range of 3% by weight or more and 6% by weight or less. No influence of the total PAA content in the binder of the negative electrode active material layer 120 on the insulation rate was observed.

In all of Examples 1 to 11, the insulating material forming the insulating layer 300 contained at least one selected from alumina, silica, acrylic resin, magnesia, calcia, titania, zirconia, boehmite, and magnesium hydroxide. Specifically, alumina was used in Examples 1 to 8, acrylic resin was used in Example 9, and silica was used in Examples 10 and 11.

As shown in Table 1, the following conditions were changed in each example by using Example 1 as the standard condition.

In Example 2, the basis weight was set to 2.6 mg/cm², which was larger than the basis weight being 2.0 mg/cm² in the insulating layer 300 in Example 1. No influence of the basis weight of the insulating layer 300 on the insulation rate was observed.

In Examples 6 to 8, silica was added to the negative electrode active material, and the PAA content in the binder was changed. In Example 6, in the total weight of the solid materials forming the negative electrode active material layer 120, silica was 2.9% by weight (small), and PAA was 3% by weight. In Example 7, silica was 9.6% by weight (medium), and PAA was 4% by weight. In Example 8, silica was 37.4% by weight (large) and PAA was 6% by weight. The PAA content was equal to or more than 3% by weight and equal to or less than 6% by weight. No influence on the insulation rate was observed even though silica was added to the negative electrode active material.

### (Comparative Examples)

Table 2 shows production conditions and evaluation results of the negative electrode 100 in comparative Examples 1 to 14.

### [Table 1]

**[Table 2]**

| | Negative electrode | | | Insulating layer | | | | | Insulation rate |
|---|---|---|---|---|---|---|---|---|---|
| | Active material | Binder type | Mixing ratio | Filler | Particle size (D50) µm | Binder type | Mixing ratio | Basis weight (mg/cm²) | |
| Comparative Example 1 | Graphite 96.6% | PAA | 3% | Alumina | 0.7 | PAA | 4% | 2.0 | 20% |
| Comparative Example 2 | Graphite 96.6% | PAA | 3% | Alumina | 0.7 | PAA | 4% | 2.6 | 20% |
| Comparative Example 3 | Graphite 96.6% | PAA | 3% | Alumina | 0.7 | PAA | 6% | 2.0 | 20% |
| Comparative Example 4 | Graphite 86.0% SiOₓ 9.6% | PAA | 4% | Alumina | 0.7 | PAA | 4% | 2.0 | 20% |
| Comparative Example 5 | Graphite 96.6% | CMC + SBR | 1% + 2% | Alumina | 0.7 | PAA | 4% | 2.0 | 0% |
| Comparative Example 6 | Graphite 96.6% | CMC + SBR | 1% + 2% | Alumina | 0.7 | PAA | 4% | 2.6 | 0% |
| Comparative Example 7 | Graphite 95.6% | CMC + SBR | 1% + 3% | Alumina | 0.7 | PAA | 4% | 2.0 | 0% |
| Comparative Example 8 | Graphite 86.0% SiOₓ 9.6% | CMC + SBR | 1% + 3% | Alumina | 0.7 | PAA | 4% | 2.0 | 0% |
| Comparative Example 9 | Graphite 96.6% | CMC + SBR | 1% + 2% | Alumina | 0.7 | CMC + SBR | 4% + 3% | 2.0 | 0% |
| Comparative Example 10 | Graphite 96.6% | CMC + SBR | 1% + 2% | Alumina | 0.7 | CMC + SBR | 4% + 3% | 2.6 | 0% |
| Comparative Example 11 | Graphite 95.6% | CMC + SBR | 1% + 3% | Alumina | 0.7 | CMC + SBR | 4% + 3% | 2.0 | 0% |
| Comparative Example 12 | Graphite 96.6% | PAA | 3% | Acrylic resin PMMA | 0.8 | PAA | 8% | 2.0 | 10% |
| Comparative Example 13 | Graphite 96.6% | CMC + SBR | 1% + 2% | Acrylic resin PMMA | 0.8 | PAA | 8% | 2.0 | 0% |
| Comparative Example 14 | Graphite 96.6% | CMC + SBR | 1% + 2% | Acrylic resin PMMA | 0.8 | CMC + SBR | 6% + 6% | 2.0 | 0% |

In Comparative Examples 1 to 3, the binder contained in the insulating layer 300 did not contain at least styrene-butadiene rubber and at least one selected from carboxymethyl cellulose and salts thereof, and PAA was used. PAA was used as the binder contained in the negative electrode active material layer 120.

In Comparative Example 2, the basis weight of the insulating layer 300 was set to 2.6 mg/cm², which was larger than that of Comparative Example 1. In Comparative Example 3, the mixing ratio of PAA in the binder contained in the insulating layer 300 was higher than that of Comparative Example 1. In Comparative Example 4, silica was added to the graphite in Example 1 as the negative electrode active material, and the weight of PAA in the binder contained in the negative electrode active material layer 120 with respect to the total weight of the solid materials forming the negative electrode active material layer 120 was set to 4% by weight, which was greater than that of in Comparative Example 1.

As results of conduction check in Comparative Examples 1 to 4, the insulation rate was 20%. In other words, in Comparative Examples 1 to 4, 2 out of 10 samples had favorable insulating property, but 8 samples did not have the favorable insulating property. In other words, in Comparative Examples 1 to 4, in which the binder contained in the insulating layer 300 did not contain at least styrene-butadiene rubber and at least one selected from carboxymethyl cellulose and salts thereof, favorable insulating properties were not obtained. Further, even though the basis weight of the insulating layer 300 was increased (Comparative Example 2), even though the mixing ratio of PAA in the binder contained in the insulating layer 300 was increased (Comparative Example 3), even though silica was added to the negative electrode active material (Comparative Example 4), and even though the mixing ratio of PAA in the binder of the negative electrode active material layer 120 was increased (Comparative Example 4), the insulating property was 20%, and was not affected by the above conditions.

In Comparative Examples 5 to 8, CMC and SBR were used as the binder contained in the negative electrode active material layer 120 instead of at least one selected from polyacrylic acid and the salts thereof.

In Comparative Example 6, the basis weight of the insulating layer 300 was set to 2.6 mg/cm², which was larger than that of Comparative Example 5. In Comparative Example 7, the mixing ratio of CMC and SBR in the binder of the negative electrode active material layer 120 was higher than that of Comparative Example 5. In Comparative Example 7, the total weight of CMC and SBR in the binder included in the negative electrode active material layer 120 with respect to the total weight of the solid materials forming the negative electrode active material layer 120 was set to 4% by weight, which was greater than that of Comparative Example 5. In Comparative Example 8, silica was added to the graphite in Comparative Example 5 as the negative electrode active material, and the weight of PAA in the binder contained in the negative electrode active material layer 120 with respect to the total weight of the solid materials forming the negative electrode active material layer 120 was set to 4% by weight, which was greater than that of Comparative Example 5.

As results of conduction check in Comparative Examples 5 to 8, the insulation rate was 0%. In other words, Comparative Examples 5 to 7 show that the favorable insulating property was not obtained for all 10 samples. In other words, in Comparative Examples 5 to 8 in which the binder contained in the negative electrode active material layer was not at least one selected from polyacrylic acid and salts thereof, and the binder contained in the insulating layer 300 did not contain at least styrene-butadiene rubber and at least one selected from carboxymethyl cellulose and salts thereof, the favorable insulating property was not obtained. Further, even though the basis weight of the insulating layer 300 was increased (Comparative Example 6), even though the mixing ratio of CMC and SBR in the binder of the negative electrode active material layer 120 was increased (Comparative Examples 7 and 8), and even though silica was added to the negative electrode active material (Comparative Example 8), the insulating property was 0%, and was not affected by the above conditions.

In Comparative Examples 9 to 11, CMC and SBR were used as binders for both the negative electrode active material layer 120 and the insulating layer 300. In Comparative Example 10, the basis weight of the insulating layer 300 was set to 2.6 mg/cm², which was larger than that of Comparative Example 9. In Comparative Example 11, the mixing ratio of CMC and SBR in the binder of the negative electrode active material layer 120 was greater than that of Comparative Example 9.

As results of conduction check in Comparative Examples 9 to 11, the insulation rate was 0%. In other words, Comparative Examples 9 to 11 show that the favorable insulating property was not obtained for all 10 samples. In other words, in Comparative Examples 9 to 11 in which the binder contained in the negative electrode active material layer 120 was not at least one selected from polyacrylic acid and salts thereof, the favorable insulating property was not obtained. Further, even though the basis weight of the insulating layer 300 was increased (Comparative Example 10), and even though the mixing ratio of CMC and SBR in the binder of the negative electrode active material layer 120 was increased (Comparative Example 11), the insulating property was 0%, and was not affected by the above conditions.

In Comparative Examples 12 to 14, acrylic resin was used as the insulating material forming the insulating layer 300. In Comparative Example 12, both the binders of the negative electrode active material layer 120 and the insulating layer 300 were PAA. In Comparative Example 13, the binder of the negative electrode active material layer 120 was CMC and SBR, and the binder of the insulating layer 300 was PAA. In Comparative Example 14, the binders for both the negative electrode active material layer 120 and the insulating layer 300 were CMC and SBR.

As a result of conduction check in Comparative Example 12, the insulation rate was 10%. In Comparative Examples 13 and 14, the insulation rate was 0%. That is, even though acrylic resin was used as the insulating layer 300, in Comparative Examples 5 to 8 in which the binder contained in the negative electrode active material layer was not at least one selected from polyacrylic acid and salts thereof, and the binder contained in the insulating layer 300 did not contain at least styrene-butadiene rubber and at least one selected from carboxymethyl cellulose and salts thereof, the favorable insulating property was not obtained.

### (2) Take a photo of the electrode surface and measure the whiteness

Table 3 below shows the results of the samples in Example 1 and Comparative Examples 1, 5, and 9.

### [Table 3]

**[Table 3]**

| | Negative electrode active material layer 120 | Insulating layer 300 | Whiteness | Insulation rate |
|---|---|---|---|---|
| Example 1 | PPA | CMC + SBR | 68.9 | 100% |
| Comparative Example 1 | PPA | PPA | 56.6 | 20% |
| Comparative Example 5 | CMC + SBR | PPA | 11.9 | 0% |
| Comparative Example 9 | CMC + SBR | CMC + SBR | 36.7 | 0% |

The whiteness of the negative electrode active material layer 120 alone is 11.7, and the whiteness of the insulating layer 300 alone is 79.7. That is, in Comparative Example 5, it is understood that the insulating layer 300 almost permeates the negative electrode active material layer 120, and the whiteness is almost the same as in the case of the negative electrode active material layer 120 alone. In Comparative Example 5, the insulation rate is also 0%.

In Comparative Examples 1 and 9, it is understood that the insulating layer 300 permeates the negative electrode active material layer 120 to a predetermined degree, and the whiteness is lower than the whiteness of the insulating layer 300 alone. In Comparative Examples 1 and 9, the insulation rate is also as low as 0 to 20%.

In Example 1, the whiteness was slightly lower than that of the insulating layer 300 alone, and the insulation rate was 100%. In other words, it is understood that the insulating layer 300 permeates the negative electrode active material layer 120 to a predetermined degree while maintaining the insulating properties.

### (3) Cross-sectional observation

Figs. 6 and 7 illustrate the cross-sectional results of the samples in Example 1, and Comparative Examples 1, 5, and 9. The SEM image and the elemental mapping image using the EDX method are arranged in order from left to right. The upper image in Fig. 6 illustrates the result of the sample in Example 1. The lower image in Fig. 6 illustrates the result of the sample in Comparative Example 9. The upper image in Fig. 7 illustrates the result of the sample in Comparative Example 1. The lower image in Fig. 7 illustrates the result of the sample in Comparative Example 5.

In the SEM image in each drawing, the top layer is the insulating layer 300, the bottom layer is the negative electrode current collector 110, and the center is the negative electrode active material layer 120. When the elemental mapping image using the EDX method on the upper side of Fig. 6 is viewed, it is understood that penetration of the second slurry 130A forming the insulating layer 300 into the negative electrode active material layer 120 at the interface between the insulating layer 300 and the negative electrode active material layer 120 of the sample in Example 1 is the lowest. Clearly, the mixed layer 320 of the negative electrode active material layer 120 and the insulating layer 300, which has a thickness thinner than the thickness of the negative electrode active material layer 120, is formed at the interface between the negative electrode active material layer 120 and the insulating layer 300.

Furthermore, the above Z_{A}/Z_{B} was 6.1%, which was equal to or less than 11%. Z_{A} was 6.3 µm. The insulation rate of the sample in Example 1 was 100%.

When the elemental mapping image using the EDX method on the lower side of Fig. 7 is viewed, it is understood that penetration of the second slurry 130A forming the insulating layer 300 into the negative electrode active material layer 120 at the interface between the insulating layer 300 and the negative electrode active material layer 120 of the sample in Comparative Example 9 is the greatest. The above Z_{A}/Z_{B} was 79%, which was equal to or more than 11%. The insulation rate of the sample in Comparative Example 9 was 0%.

When the elemental mapping image using the EDX method in Fig. 7 is viewed, it is understood that penetration of the second slurry 130A forming the insulating layer 300 into the negative electrode active material layer 120 in the sample (upper side of Fig. 7) in Comparative Example 1 is smaller at the interface between the insulating layer 300 and the negative electrode active material layer 120 than that of the sample (lower side of Fig. 7) in Comparative Example 5. The above Z_{A}/Z_{B} of the samples in Comparative Examples 1 and 5 were 44% and 36%, respectively, both of which were equal to or more than 11%. The insulation rate of the sample in Comparative Example 1 is 20%, which is higher than the insulation rate of 0% of the sample in Comparative Example 5.

### (4) Evaluation of interfacial peeling strength between simultaneous coating and sequential coating

After a tape was attached to the surface of the insulating layer 300 of the negative electrode sheet 100A of the sample, the tape was peeled off by pulling in a direction of 180 degrees with respect to the sheet surface. In the sample of simultaneous coating, powder on the surface of the insulating layer 300 was only thinly adhered to the tape. In the sample of sequential coating, the insulating layer 300 peeled off from the interface between the insulating layer 300 and the negative electrode active material layer 120 was transferred to the tape in stripes.

From such results, it is understood that the interfacial peeling strength of the sample prepared by simultaneous coating is stronger than that of the sample prepared by sequential coating, and almost no peeling occurs.

Hitherto, the present invention has been described above with reference to the embodiment (and examples), but the present invention is not limited to the above embodiment (and the examples). Various changes that may be understood by those skilled in the art may be made within the scope of the present invention in terms of the configuration and details of the present invention.

Examples of reference forms are added below.
1. A negative electrode for a lithium ion secondary battery, having a negative electrode active material layer containing at least a negative electrode active material and a binder formed on a current collector, in which
   the negative electrode further includes
   an insulating layer containing at least an insulating material and a binder is further provided on a surface of the negative electrode active material layer,
   the binder contained in the insulating layer includes at least styrene-butadiene rubber and at least one selected from carboxymethyl cellulose and salts thereof, and
   the binder contained in the negative electrode active material layer is at least one selected from polyacrylic acid and salts thereof.
2. The negative electrode for the lithium ion secondary battery described in 1., in which
   a mixed layer of a negative electrode active material layer and the insulating layer is formed at an interface between the negative electrode active material layer and the insulating layer, a thickness of the mixed layer being thinner than a thickness of the negative electrode active material layer.
3. The negative electrode for the lithium ion secondary battery described in 1. or 2., in which
   when elemental mapping is performed by using an EDX method on a cross-sectional SEM image of a cross section of a negative electrode, and a direction toward a side of the current collector from a surface of the negative electrode active material layer, a side of which is not in contact with the current collector is set as a Z-direction, a maximum value in the Z-direction in which an element that is not detected from the negative electrode active material, but is detected from the insulating material is detected is set as Z_{A}, and an average thickness of the negative electrode active material layer in the Z-direction is set as Z_{B},
   Z_{A}/Z_{B} is equal to or less than 11%.
4. The negative electrode for the lithium ion secondary battery described in 3., in which the maximum value Z_{A} of a thickness in the Z-direction is equal to or less than 35 µm.
5. The negative electrode for the lithium ion secondary battery described in any one of 1. to 4., in which
   the D50 particle size at which the cumulative volume is 50% in the particle size distribution of the particle size of the insulating material is equal to or more than 0.2 µm and equal to or less than 0.8 µm.
6. The negative electrode for the lithium ion secondary battery described in any one of 1. to 5., in which
   the weight of the styrene-butadiene rubber contained in the insulating layer with respect to the total weight of the solid material forming the insulating layer is equal to or more than 3% by weight and equal to or less than 6% by weight.
7. The negative electrode for the lithium ion secondary battery described in any one of 1. to 6., in which
   the total weight of polyacrylic acid and salts thereof in the binder, which are the polyacrylic acid and the salts thereof contained in the negative electrode active material layer with respect to the total weight of the solid material forming the negative electrode active material layer is equal to or more than 3% by weight and equal to or less than 6% by weight.
8. The negative electrode for the lithium ion secondary battery described in any one of 1. to 7., in which
   the insulating material contains at least one selected from alumina, silica, acrylic resin, magnesia, calcia, titania, zirconia, boehmite, and magnesium hydroxide.
9. A lithium ion secondary battery including:
   a positive electrode having a positive electrode active material layer formed on a current collector,
   a negative electrode, and
   an electrolyte,
   wherein the negative electrode is the negative electrode according to any one of 1. to 8.
10. The lithium ion secondary battery described in 9., in which
   the insulating layer is formed on an entire surface of the negative electrode active material layer of the negative electrode, which faces at least a region in which an active material layer of the positive electrode is formed.
11. The lithium ion secondary battery described in 9. or 10., in which
   a separator different from the insulating layer formed on the negative electrode active material layer of the negative electrode is not disposed between the positive electrode and the negative electrode.
12. A manufacturing method of a negative electrode for a lithium ion secondary battery, the method including: in at least a following order,
   a process (A) of applying a negative electrode active material slurry containing at least a negative electrode active material and a binder onto a sheet-like current collector,
   a process (B) of applying an insulating layer slurry containing at least an insulating material and a binder onto a surface of the negative electrode active material slurry, and
   a process (C) of drying the slurries applied in the process (A) and the process (B) together,
   wherein the binder contained in the insulating layer slurry contains at least styrene-butadiene rubber and at least one selected from carboxymethyl cellulose and salts thereof, and
   wherein the binder contained in the negative electrode active material slurry is at least one selected from polyacrylic acid and salts thereof.
13. A manufacturing method of a negative electrode sheet for a lithium ion secondary battery for manufacturing a negative electrode for the lithium ion secondary battery by the manufacturing method described in 12., including
   causing a negative electrode active material slurry containing at least a negative electrode active material and a binder and an insulating layer slurry containing at least an insulating material and a binder to be continuously applied in a direction in which a current collector sheet is continuously transported.
14. The manufacturing method of the negative electrode sheet for the lithium ion secondary battery described in 13, in which
   by using a discharge head including at least a first discharge port and a second discharge port arranged in the direction in which the current collector sheet is transported,
   the negative electrode active material slurry is discharged from the first discharge port, and
   the insulating layer slurry is discharged from the second discharge port.
15. The manufacturing method of the negative electrode sheet for the lithium ion secondary battery described in 13. or 14., in which
   a solid content concentration of the negative electrode active material slurry is equal to or more than 40% and equal to or less than 80%, and
   a solid content concentration of the insulating layer slurry is equal to or more than 20% and equal to or less than 80%.
16. The manufacturing method of the negative electrode sheet for the lithium ion secondary battery described in 15., in which
   a viscosity of the negative electrode active material slurry at a shear rate of 2.04s-1 at 20°C by a B-type viscometer is equal to or more than 6 Pa·S and equal to or less than 10 Pa·S, and
   a viscosity of the insulating layer slurry at a shear rate of 2.04s-1 at 20°C by the B-type viscometer is equal to or more than 6 Pa·S and equal to or less than 10 Pa·S.
17. The manufacturing method of the negative electrode sheet for the lithium ion secondary battery described in any one of 13. to 16., in which
   a D50 particle size at which a cumulative volume is 50% in a particle size distribution of a particle size of the insulating material contained in the insulating layer slurry is equal to or more than 0.2 µm and equal to or less than 0.8 µm.
18. The manufacturing method of the negative electrode sheet for the lithium ion secondary battery described in any one of 13. to 17., in which
   a total weight of styrene-butadiene rubber contained in an insulating layer formed by the insulating layer slurry, with respect to a total weight of a solid material forming the insulating layer, is equal to or more than 3% by weight and equal to or less than 6% by weight.
19. The manufacturing method of the negative electrode sheet for the lithium ion secondary battery described in any one of 13. to 18., in which
   a total weight of polyacrylic acid and salts thereof in the binder, which are the polyacrylic acid and the salts thereof contained in the negative electrode active material layer with respect to a total weight of a solid material forming the negative electrode active material layer formed by the negative electrode active material slurry is equal to or more than 3% by weight and equal to or less than 6% by weight.
20. The manufacturing method of the negative electrode sheet for the lithium ion secondary battery described in any one of 13. to 19., in which
   the insulating material contains at least one selected from alumina, silica, acrylic resin, magnesia, calcia, titania, zirconia, boehmite, and magnesium hydroxide.
21. A negative electrode for an all-solid-state lithium ion secondary battery, which is a negative electrode for a lithium ion secondary battery, the negative electrode having a negative electrode active material layer containing at least a negative electrode active material and a binder formed on a current collector, further including
   a high-resistance layer containing at least a solid electrolyte and a binder is further provided on a surface of the negative electrode active material layer, in which
   the binder contained in the high-resistance layer includes at least styrene-butadiene rubber and at least one selected from carboxymethyl cellulose and salts thereof, and
   the binder contained in the negative electrode active material layer is at least one selected from polyacrylic acid and salts thereof.
22. The negative electrode for the all-solid-state lithium ion secondary battery described in 21., in which
   a mixed layer of a negative electrode active material layer and the high-resistance layer is formed at an interface between the negative electrode active material layer and the high-resistance layer, a thickness of the mixed layer being thinner than a thickness of the negative electrode active material layer.
23. The negative electrode for the all-solid-state lithium ion secondary battery described in 21. or 22., in which
   when elemental mapping is performed by using an EDX method on a cross-sectional SEM image of a cross section of a negative electrode, and a direction toward a side of the current collector from a surface of the negative electrode active material layer, a side of which is not in contact with the current collector is set as a Z-direction, a maximum value in the Z-direction in which an element that is not detected from the negative electrode active material, but is detected from the solid electrolyte is detected is set as Z_{A}, and an average thickness of the negative electrode active material layer in the Z-direction is set as Z_{B},
   Z_{A}/Z_{B} is equal to or less than 11%.
24. The negative electrode for the all-solid-state lithium ion secondary battery described in 3., in which the maximum value Z_{A} of a thickness in the Z-direction is equal to or less than 35 µm.
25. The negative electrode for the all-solid-state lithium ion secondary battery described in any one of 21. to 24., in which
   a D50 particle size at which a cumulative volume is 50% in a particle size distribution of a particle size of the solid electrolyte is equal to or more than 0.2 µm and equal to or less than 0.8 µm.
26. The negative electrode for the all-solid-state lithium ion secondary battery described in any one of 21. to 25., in which
   a weight of the styrene-butadiene rubber contained in the high-resistance layer with respect to a total weight of a solid material forming the high-resistance layer is equal to or more than 3% by weight and equal to or less than 6% by weight.
27. The negative electrode for the all-solid-state lithium ion secondary battery described in any one of 21. to 26., in which
   the total weight of polyacrylic acid and salts thereof in the binder, which are the polyacrylic acid and the salts thereof contained in the negative electrode active material layer with respect to the total weight of the solid material forming the negative electrode active material layer is equal to or more than 3% by weight and equal to or less than 6% by weight.
28. An all-solid-state lithium ion secondary battery including:
   a positive electrode having a positive electrode active material layer formed on a current collector,
   the negative electrode, and
   a solid electrolyte,
   wherein the negative electrode is the negative electrode described in any one of 21. to 27.
29. A manufacturing method of a negative electrode for an all-solid-state lithium ion secondary battery, the method comprising: in at least a following order,
   a process (A) of applying a negative electrode active material slurry containing at least a negative electrode active material and a binder onto a sheet-like current collector,
   a process (B) of applying a high-resistance layer slurry containing at least a solid electrolyte and a binder onto a surface of the negative electrode active material slurry, and
   a process (C) of drying the slurries applied in the process (A) and the process (B) together, in which
   the binder contained in the high-resistance layer slurry contains at least styrene-butadiene rubber and at least one selected from carboxymethyl cellulose and salts thereof, and
   the binder contained in the negative electrode active material slurry is at least one selected from polyacrylic acid and salts thereof.
30. A manufacturing method of a negative electrode sheet for an all-solid-state lithium ion secondary battery for manufacturing a negative electrode for an all-solid-state lithium ion secondary battery by the manufacturing method described in 29., including
   causing a negative electrode active material slurry containing at least a negative electrode active material and a binder and a high-resistance layer slurry containing at least a solid electrolyte and a binder to be continuously applied in a direction in which a current collector sheet is continuously transported.

This application claims priority on the basis of Japanese application Japanese Patent Application No. 2020-101806 filed on June 11, 2020, and incorporates the entirety of its disclosure herein.

### REFERENCE SIGNS LIST

10 lithium ion secondary battery
12 stacked body
150 first lead
250 second lead
400 exterior material
100 negative electrode
100A negative electrode sheet
110 negative electrode current collector
110A negative electrode current collector sheet
112 first surface
114 second surface
120 negative electrode active material layer
122 surface
200 positive electrode
210 positive electrode current collector
212 third surface
214 fourth surface
220 positive electrode active material layer
300 insulating layer
312 fifth surface
314 sixth surface
320 mixed layer
120A first slurry
130A second slurry
500 apparatus
510 first discharge head
510 discharge port
512 second discharge head
512 discharge port
522 first tank
524 first pump
526 first valve
532 second tank
534 second pump
536 second valve
542 first transport roller
544 second transport roller
546 third transport roller
550 dryer

## Claims

1. A negative electrode for a lithium ion secondary battery, having a negative electrode active material layer containing at least a negative electrode active material and a binder formed on a current collector, wherein
the negative electrode further comprises
an insulating layer containing at least an insulating material and a binder provided on a surface of the negative electrode active material layer,
the binder contained in the insulating layer includes at least styrene-butadiene rubber and at least one selected from carboxymethyl cellulose and salts thereof, and
the binder contained in the negative electrode active material layer is at least one selected from polyacrylic acid and salts thereof.

2. The negative electrode for the lithium ion secondary battery according to claim 1, wherein
a mixed layer of a negative electrode active material layer and the insulating layer is formed at an interface between the negative electrode active material layer and the insulating layer, a thickness of the mixed layer being thinner than a thickness of the negative electrode active material layer.

3. The negative electrode for the lithium ion secondary battery according to claim 1 or 2, wherein
when elemental mapping is performed by using an EDX method on a cross-sectional SEM image of a cross section of the negative electrode, and a direction toward a side of the current collector from a surface of the negative electrode active material layer, a side of which is not in contact with the current collector is set as a Z-direction, a maximum value in the Z-direction in which an element that is not detected from the negative electrode active material, but is detected from the insulating material is detected is set as Z_{A}, and an average thickness of the negative electrode active material layer in the Z-direction is set as Z_{B},
Z_{A}/Z_{B} is equal to or less than 11%.

4. The negative electrode for the lithium ion secondary battery according to claim 3, wherein
the maximum value Z_{A} of a thickness in the Z-direction is equal to or less than 35 µm.

5. The negative electrode for the lithium ion secondary battery according to any one of claims 1 to 4, wherein
a D50 particle size at which a cumulative volume is 50% in a particle size distribution of a particle size of the insulating material is equal to or more than 0.2 µm and equal to or less than 0.8 µm.

6. The negative electrode for the lithium ion secondary battery according to any one of claims 1 to 5, wherein
a weight of the styrene-butadiene rubber contained in the insulating layer with respect to a total weight of a solid material forming the insulating layer is equal to or more than 3% by weight and equal to or less than 6% by weight.

7. The negative electrode for the lithium ion secondary battery according to any one of claims 1 to 6, wherein
a total weight of the polyacrylic acid and the salts thereof in the binder, which are the polyacrylic acid and the salts thereof contained in the negative electrode active material layer with respect to a total weight of a solid material forming the negative electrode active material layer is equal to or more than 3% by weight and equal to or less than 6% by weight.

8. The negative electrode for the lithium ion secondary battery according to any one of claims 1 to 7, wherein
the insulating material contains at least one selected from alumina, silica, acrylic resin, magnesia, calcia, titania, zirconia, boehmite, and magnesium hydroxide.

9. A lithium ion secondary battery comprising:
a positive electrode having a positive electrode active material layer formed on a current collector;
a negative electrode; and
an electrolyte,
wherein the negative electrode is the negative electrode according to any one of claims 1 to 8.

10. The lithium ion secondary battery according to claim 9, wherein
the insulating layer is formed on an entire surface of the negative electrode active material layer of the negative electrode, which faces at least a region in which an active material layer of the positive electrode is formed.

11. The lithium ion secondary battery according to claim 9 or 10, wherein
a separator different from the insulating layer formed on the negative electrode active material layer of the negative electrode is not disposed between the positive electrode and the negative electrode.

12. A manufacturing method of a negative electrode for a lithium ion secondary battery, the method comprising: in at least a following order,
a process (A) of applying a negative electrode active material slurry containing at least a negative electrode active material and a binder onto a sheet-like current collector;
a process (B) of applying an insulating layer slurry containing at least an insulating material and a binder onto a surface of the negative electrode active material slurry; and
a process (C) of drying the slurries applied in the process (A) and the process (B) together, wherein the binder contained in the insulating layer slurry contains at least styrene-butadiene rubber and at least one selected from carboxymethyl cellulose and salts thereof, and
wherein the binder contained in the negative electrode active material slurry is at least one selected from polyacrylic acid and salts thereof.

13. A manufacturing method of a negative electrode sheet for a lithium ion secondary battery for manufacturing a negative electrode for the lithium ion secondary battery by the manufacturing method according to claim 12, comprising
causing a negative electrode active material slurry containing at least a negative electrode active material and a binder and an insulating layer slurry containing at least an insulating material and a binder to be continuously applied in a direction in which a current collector sheet is continuously transported.

14. The manufacturing method of the negative electrode sheet for the lithium ion secondary battery according to claim 13, wherein
by using a discharge head including at least a first discharge port and a second discharge port arranged in the direction in which the current collector sheet is transported,
the negative electrode active material slurry is discharged from the first discharge port, and
the insulating layer slurry is discharged from the second discharge port.

15. The manufacturing method of the negative electrode sheet for the lithium ion secondary battery according to claim 13 or 14, wherein
a solid content concentration of the negative electrode active material slurry is equal to or more than 40% and equal to or less than 80%, and
a solid content concentration of the insulating layer slurry is equal to or more than 20% and equal to or less than 80%.

16. The manufacturing method of the negative electrode sheet for the lithium ion secondary battery according to claim 15, wherein
a viscosity of the negative electrode active material slurry at a shear rate of 2.04s-1 at 20°C by a B-type viscometer is equal to or more than 6 Pa·S and equal to or less than 10 Pa·S, and
a viscosity of the insulating layer slurry at a shear rate of 2.04s-1 at 20°C by the B-type viscometer is equal to or more than 6 Pa·S and equal to or less than 10 Pa·S.

17. The manufacturing method of the negative electrode sheet for the lithium ion secondary battery according to any one of claims 13 to 16, wherein
a D50 particle size at which a cumulative volume is 50% in a particle size distribution of a particle size of the insulating material contained in the insulating layer slurry is equal to or more than 0.2 µm and equal to or less than 0.8 µm.

18. The manufacturing method of the negative electrode sheet for the lithium ion secondary battery according to any one of claims 13 to 17, wherein
a total weight of styrene-butadiene rubber contained in an insulating layer formed by the insulating layer slurry, with respect to a total weight of a solid material forming the insulating layer, is equal to or more than 3% by weight and equal to or less than 6% by weight.

19. The manufacturing method of the negative electrode sheet for the lithium ion secondary battery according to any one of claims 13 to 18, wherein
a total weight of polyacrylic acid and salts thereof in the binder, which are the polyacrylic acid and the salts thereof contained in the negative electrode active material layer with respect to a total weight of a solid material forming the negative electrode active material layer formed by the negative electrode active material slurry is equal to or more than 3% by weight and equal to or less than 6% by weight.

20. The manufacturing method of the negative electrode sheet for the lithium ion secondary battery according to any one of claims 13 to 19, wherein
the insulating material contains at least one selected from alumina, silica, acrylic resin, magnesia, calcia, titania, zirconia, boehmite, and magnesium hydroxide.

21. A negative electrode for an all-solid-state lithium ion secondary battery, which is a negative electrode for a lithium ion secondary battery, the negative electrode having a negative electrode active material layer containing at least a negative electrode active material and a binder formed on a current collector, further including
a high-resistance layer containing at least a solid electrolyte and a binder on a surface of the negative electrode active material layer, wherein
the binder contained in the high-resistance layer includes at least styrene-butadiene rubber and at least one selected from carboxymethyl cellulose and salts thereof, and
the binder contained in the negative electrode active material layer is at least one selected from polyacrylic acid and salts thereof.

22. The negative electrode for the all-solid-state lithium ion secondary battery according to claim 21, wherein
a mixed layer of a negative electrode active material layer and the high-resistance layer is formed at an interface between the negative electrode active material layer and the high-resistance layer, a thickness of the mixed layer being thinner than a thickness of the negative electrode active material layer.

23. The negative electrode for the all-solid-state lithium ion secondary battery according to claim 21 or 22, wherein
when elemental mapping is performed by using an EDX method on a cross-sectional SEM image of a cross section of the negative electrode, and a direction toward a side of the current collector from a surface of the negative electrode active material layer, a side of which is not in contact with the current collector is set as a Z-direction, a maximum value in the Z-direction in which an element that is not detected from the negative electrode active material, but is detected from the solid electrolyte is detected is set as Z_{A}, and an average thickness of the negative electrode active material layer in the Z-direction is set as Z_{B},
Z_{A}/Z_{B} is equal to or less than 11%.

24. The negative electrode for the all-solid-state lithium ion secondary battery according to claim 23, wherein
the maximum value Z_{A} of a thickness in the Z-direction is equal to or less than 35 µm.

25. The negative electrode for the all-solid-state lithium ion secondary battery according to any one of claims 21 to 24, wherein
a D50 particle size at which a cumulative volume is 50% in a particle size distribution of a particle size of the solid electrolyte is equal to or more than 0.2 µm and equal to or less than 0.8 µm.

26. The negative electrode for the all-solid-state lithium ion secondary battery according to any one of claims 21 to 25, wherein
a weight of the styrene-butadiene rubber contained in the high-resistance layer with respect to a total weight of a solid material forming the high-resistance layer is equal to or more than 3% by weight and equal to or less than 6% by weight.

27. The negative electrode for the all-solid-state lithium ion secondary battery according to any one of claims 21 to 26, wherein
a total weight of the polyacrylic acid and the salts thereof in the binder, which are the polyacrylic acid and the salts thereof contained in the negative electrode active material layer with respect to a total weight of a solid material forming the negative electrode active material layer is equal to or more than 3% by weight and equal to or less than 6% by weight.

28. An all-solid-state lithium ion secondary battery comprising:
a positive electrode having a positive electrode active material layer formed on a current collector;
a negative electrode; and
a solid electrolyte,
wherein the negative electrode is the negative electrode according to any one of claims 21 to 27.

29. A manufacturing method of a negative electrode for an all-solid-state lithium ion secondary battery, the method comprising: in at least a following order,
a process (A) of applying a negative electrode active material slurry containing at least a negative electrode active material and a binder onto a sheet-like current collector;
a process (B) of applying a high-resistance layer slurry containing at least a solid electrolyte and a binder onto a surface of the negative electrode active material slurry; and
a process (C) of drying the slurries applied in the process (A) and the process (B) together,
wherein the binder contained in the high-resistance layer slurry contains at least styrene-butadiene rubber and at least one selected from carboxymethyl cellulose and salts thereof, and
wherein the binder contained in the negative electrode active material slurry is at least one selected from polyacrylic acid and salts thereof.

30. A manufacturing method of a negative electrode sheet for an all-solid-state lithium ion secondary battery for manufacturing a negative electrode for the all-solid-state lithium ion secondary battery by the manufacturing method according to claim 29, comprising
causing a negative electrode active material slurry containing at least a negative electrode active material and a binder and a high-resistance layer slurry containing at least a solid electrolyte and a binder to be continuously applied in a direction in which a current collector sheet is continuously transported.
